## Europäisches Patentamt
## European Patent Office
## Office européen des brevets

(11) Veröffentlichungsnummer: **0 327 491**

**A1**

# (12) EUROPÄISCHE PATENTANMELDUNG

(21) Anmeldenummer: **89810022.7**

(22) Anmeldetag: **11.01.89**

(51) Int. Cl.⁴: **C 02 F 1/20**
B 01 D 19/00, B 01 D 53/18,
F 01 N 3/10, C 25 B 1/02

(30) Priorität: **28.01.88 CH 287/88**

(43) Veröffentlichungstag der Anmeldung:
**09.08.89 Patentblatt 89/32**

(84) Benannte Vertragsstaaten:
**DE ES FR GB IT NL**

(71) Anmelder: **GEBRÜDER SULZER
AKTIENGESELLSCHAFT
Zürcherstrasse 9
CH-8401 Winterthur (CH)**

(72) Erfinder: **Mandrin, Charles, Dr.
Im Laubegg 7
CH-8406 Winterthur (CH)**

Die Bezeichnung der Erfindung wurde geändert (Richtlinien für die Prüfung im EPA, A-III, 7.3).

(54) **Verfahren und Anlage zur Entfernung von gelöstem Sauerstoff aus Wasser, insbesondere aus Meerwasser.**

(57) Die Anlage zur Durchführung einer Deoxidation von Wasser, insbesondere Meerwasser weist einen Kreislauf für ein Treibgas, z.B. Stickstoff auf. Im Kreislauf sind im wesentlichen eine Gegenstromkolonne (1), eine katalytische Verbrennungsvorrichtung (11) und eine Strahlpumpe (7) angeordnet. Zur Deoxidation von Meerwasser, das zum Auspressen von Oel, insbesondere aus Oelquellen unterhalb des Meeresgrundes dienen, wird ein Treibgas benutzt und in der Gegenstromkolonne (1) mit Meerwasser in Kontakt gebracht. Aus dem beladenen Treibgas wird in der katalytischen Verbrennungsvorrichtung (11) der Sauerstoff weitgehend mit Hilfe eines Brenngases, z.B. Erdgas, entfernt.

Der erforderliche Förderdruck im Kreislauf wird mit Hilfe der Strahlpumpe (7) erzeugt, die an die Druckseite einer, in der Ableitung (3) des deoxidierten Meerwassers angeordneten Hochdruckpumpe (4) angeordnet ist.

Das Verfahren weist als wesentlichen Vorteil auf, dass die zugehörige Anlage nur wenig Komponenten benötigt. Die Hochdruckpumpe (4) ist der einzige bewegliche Teil der Anlage. Dadurch wird eine bessere Betriebszuverlässigkeit erreicht, und die Anlage wird kleiner.

FIG. 1

EP 0 327 491 A1

## Beschreibung

## Verfahren und Anlage zum Deoxidieren von Wasser, insbesondere Meerwasser

Die Erfindung betrifft ein Verfahren und eine Anlage gemäss Oberbegriff der Ansprüche 1 und 16.

Es ist bekannt, Oel aus Oelfeldern bzw. Oelquellen mittels Druckgas oder Druckwasser auszupressen. Häufig befinden sich derartige Oelreserven unterhalb des Meeresgrundes. Das Oel wird in diesen Fällen insbesondere mit Hilfe von Anlagen, die auf künstlichen Inseln, sogenannte Plattformen, gegebenenfalls aber auch auf Schiffen montiert sein können, gewonnen.

Natürliches Meerwasser enthält ca. 10 ppm gelösten Sauerstoff, entsprechend dem Partialdruck des Sauerstoffes in der Atmosphäre. Da dieser Sauerstoffgehalt des Meerwassers für den vorstehend genannten Verwendungszweck unzulässig hoch ist, insbesondere wegen der durch ihn bewirkten äusserst aggresiven Korrosion der Anlagenteile und Leitungen, aber auch wegen einer Verstopfungsgefahr durch sich bei diesem Sauerstoffgehalt in grossem Masse entwickelnden Algen, ist es erforderlich, das benötigte Meerwasser weitgehend, d.h. bis mindestens auf 20 ppb Sauerstoffgehalt zu deoxidieren.

Für die Deoxidierung von Meerwasser sind verschiedene Verfahren bekannt. Eines dieser Verfahren wird mit Hilfe von Vakuumentgasung durchgeführt. Um den Partialdruck des Sauerstoffs von 0,2 bar (entsprechend dem zwanzigprozentigen Sauerstoffgehalt der Luft) auf mindestens 0,004 bar (entsprechend 20 ppb in Meerwasser gelöstem Sauerstoff) zu bringen, soll hierbei das Meerwasser in Vakuumkolonnen eingespritzt werden. Diese Vakuumkolonnen können z.B. Rieseleinbauten, wie Packungen oder Füllkörperschüttungen enthalten. Zur Aufrechterhaltung des Vakuums sind Vakuumpumpen erforderlich.

Zwar werden bei diesem Verfahren keine zusätzlichen Fremdstoffe benötigt sondern ausschliesslich elektrische Energie. Jedoch werden trotz der relativ niedrigen Umgebungstemperatur (beispielsweise ca. 8° C in der Nordsee) sehr grosse Wassermengen infolge des niedrigen Kolonnendruckes verdampft. Ausserdem müssen die Vakuumpumpen zusätzlich zum Sauerstoff auch alle anderen, im Meerwasser gelöste Gase, wie Stickstoff, Argon etc. absaugen. Zwar ist es üblich, zur Entlastung der einzelnen Vakuumpumpen, mehrere Vakuumkolonnen in Serie als Kaskade zu schalten. Trotz solcher Massnahmen sind die Druckverhältnisse der Vakuumpumpen sehr gross.

Für Meerwasser werden normalerweise gummierte Stahlleitungen und Stahlbehälter eingesetzt. Andere meerwasserbeständige Materialien, wie z.B. Kupferlegierungen oder Kunststoffe, sind wesentlich teurer und/oder weisen nicht die gewünschten mechanischen Eigenschaften auf. Bei Vakuumleitungen und Behältern besteht die Gefahr, dass beim Anbringen der Gummierung zwischen Stahl und Gummi Luft verbleibt. Sobald Vakuum erzeugt wird, werden diese Stellen nach innen aufgeblasen, und die Gummierung wird zerstört.

Ausserdem werden die Meerwasser-Hochdruckpumpen aus wirtschaftlichen Gründen mit hohen Geschwindigkeiten betrieben und sind daher kavitationsanfällig, im Falle der absolute Eintrittsdruck kleiner als 2 bis 3 bar ist. Daher benötigt die Vakuumentgasung langsamlaufende, sogenannte "Vordruckpumpen".

Speziell auf Bohrinseln und Bohrschiffen spielen Gewicht und Abmessungen derartiger Anlagen eine wesentliche Rolle. Die vorstehend beschriebene bekannte Anlage benötigt danach relativ grosse und/oder zusätzliche Komponenten mit entsprechendem Gewicht- und Platzbedarf.

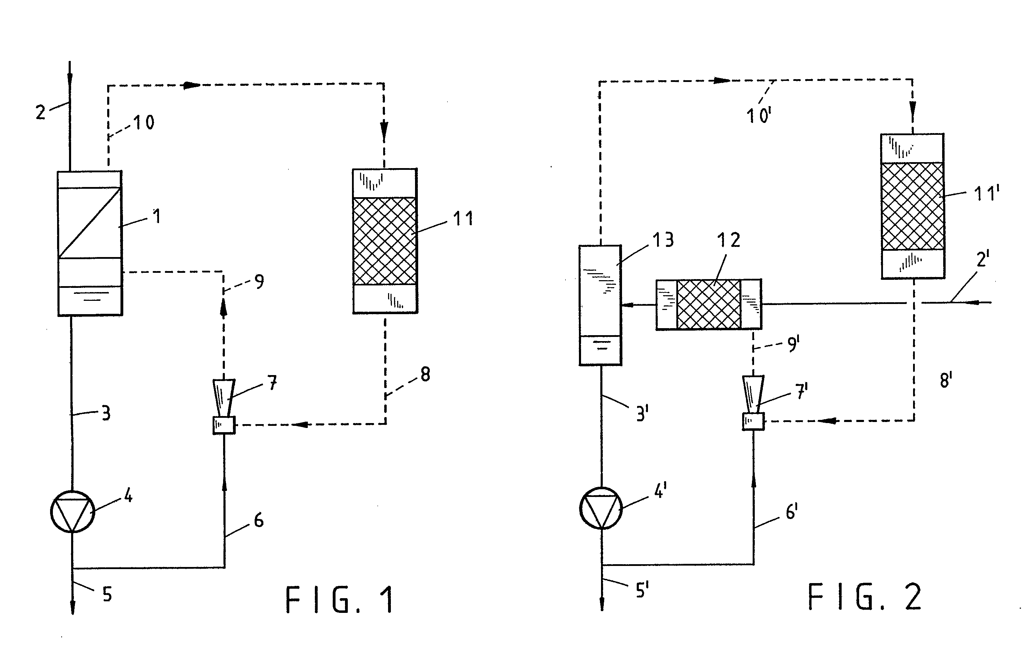

Bei einem anderen bekannten Verfahren, wie es z.B. in der GB-PS 1 531 537 beschrieben wird, soll die Deoxidierung von Meerwasser mit Hilfe eines Treibgases durchgeführt werden. Hierbei wird der tiefere Partialdruck des Treibgases nicht mittels Vakuum, sondern durch Verwendung eines weitgehend sauerstofffreien Gases, wie z.B. Erdgas oder Stickstoff aus einer Luftzerlegungsanlage erzeugt. Die Erdgas- oder Stickstoffquelle weist als wesentlichen Nachteil einen grossen Gasverbrauch gegenüber einer Vakuumentgasung auf. Je tiefer der erforderliche Sauerstoffgehalt des Meerwassers ist, umso tiefer ist der erforderliche Betriebsdruck der Kontaktapparate. Praktisch ist ein Betriebsdruck von weniger als 3 bar erforderlich. Für eine Weiterverwendung der mit Sauerstoff und eventuell mit Salztröpfchen beladenen Treibgase, die aus den Trennvorrichtungen für deoxidiertes Meerwasser austreten, ist eine anschliessende Kompression unvermeidlich. Auch nach der Kompression ist die Verwendung der rekuperierten Gase sehr begrenzt. So ist Stickstoff mit ca. 0,7 % Sauerstoff für die meisten chemischen Anwendungen nicht verwendbar. Für Verfahren, wie sie die Erfindung betrifft, sind derartige Gase für die Injektion nicht verwendbar, da sie zu viel Sauerstoff enthalten. Gemäss der DE-PS 1 531 537 sollen statische Mischer anstelle von Kolonnen als Kontaktapparate eingesetzt werden. Jedoch würde die erforderliche hohe Reinheit von 20 ppb Sauerstoff im Meerwasser mindestens drei statische Mischer in Serienschaltung erfordern. In Fig. 1 der Patentschrift ist eine Ausführungsform dargestellt, die eine relativ grosse Treibgasmenge erforderlich macht. Demgegenüber sind bei einer in Fig. 2 der Patentschrift dargestellten Ausführungsform Kompressoren oder zusätzliche Pumpen erforderlich.

Es ist ein Hauptziel der Erfindung, ein Verfahren zur Deoxidierung von Wasser, insbesondere Meerwasser zu ermöglichen, welches in einer Anlage durchgeführt werden kann, die ein wesentlich geringeres Gewicht besitzt und wesentlich kleinere Abmessungen erfordert, wobei weiterhin wenigere Komponenten erforderlich sein sollen. Ausserdem soll der Verbrauch von Treibgas auf ein Minimum beschränkt werden.

Diese Aufgabe wird mit Hilfe der in den Kennzeichen der Ansprüche 1 und 18 angegebenen Massnahmen gelöst.

In den Ansprüchen 2 bis 17 und 19 bis 24 sind vorteilhafte Ausführungsformen bzw. Weiterbildungen der Erfindung beschrieben.

So besteht eine besonders vorteilhafte Ausführungsform der Erfindung darin, dass der erforderliche Förderdruck im Kreislauf des Treibgases mit Hilfe einer Strahlpumpe erzeugt wird, wobei der Treibstrahl deoxidiertes Druckwasser ist. In diesem Fall weist die Anlage überhaupt keine beweglichen Konstruktionselemente auf. Ausserdem kann als Treibstrahl eine kleine Teilmenge von deoxidiertem Wasser verwendet werden, welches von der Druckseite der ohnehin vorhandenen Hochdruckpumpe entnommen wird, die für die Injektion des deoxidierten Wassers benötigt wird.

Wenn es auch von besonderem Vorteil ist, die Erfindung für sich unterhalb des Meeresgrundes befindende Oelquellen anzuwenden, wie in der Beschreibungseinleitung ausgeführt wird, so umfasst die Erfindung auch auf dem Festland installierte Anlagen, die zur Oelförderung aus Oelquellen dienen, die sich unterhalb der Erdoberfläche befinden. In diesem Fall kann als Fördermittel gegebenenfalls auch Süsswasser dienen, welches vor der Injektion in die Oelquellen ebenfalls deoxiert werden muss.

Im folgenden wird die Erfindung anhand von in der Zeichnung schematisch dargestellten Ausführungsformen erläutert.

Die Fig. 1 bis 7 zeigen

1. eine Anlage mit einer Extraktionskolonne als Kontaktvorrichtung für Meerwasser und Treibgas,

2. eine Anlage mit einem statischen Mischer als Kontaktvorrichtung und anschliessenden Trennvorrichtungen,

3. eine gegenüber Fig. 2 abgewandelte Ausführungsform mit einer Serienschaltung von statischen Mischern und Trennvorrichtungen bezüglich der Strömungsrichtung des Meerwassers,

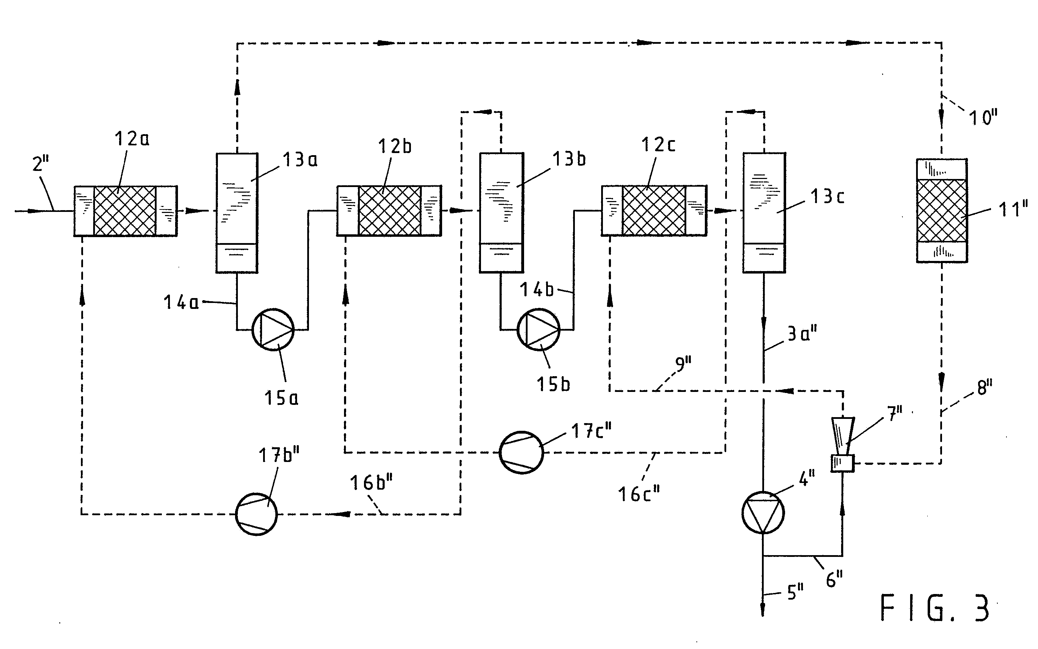

4. eine weitere gegenüber Fig. 3 abgewandelte Ausführungsform hinsichtlich der Zusammenschaltung der statischen Mischer und Trennvorrichtungen,

5. eine im wesentlichen der Fig. 1 entsprechende Ausführungsform mit Erdgas als Brenngas für die katalytische Verbrennung des Sauerstoffgehaltes des Treibgases,

6. eine Ausführungsform mit Wasserstoff als Brenngas für die katalytische Verbrennung des Sauerstoffgehaltes des Treibgases und

7. eine Ausführungsform, bei der der Sauerstoffgehalt des Treibgases mit Hilfe eines reduzierenden Lösungsmittels in einer Redox-Reaktion abgetrennt wird.

Die Fig. 1 zeigt eine Anlage mit einer Gegenstromkolonne 1 als Kontaktvorrichtung. Diese Kolonne kann in bekannter Weise Packungskörper aufweisen, wie sie z.B. in den schweizerischen Patentschriften 398 503 und 617 357 beschrieben sind oder eine Füllkörperschüttung, die beispielsweise aus Raschigringen besteht.

Das zu deoxidierende Meerwasser, das beispielsweise ein Sauerstoffgehalt von ca. 10 ppm und eine Temperatur von ca. 8°C aufweist, wird bei einem Druck von ca. 4 bis 5 bar durch eine Leitung 2 in die Kolonne 1 eingeleitet und nach seiner Deoxidierung bis zu ca. 20 ppb durch eine Leitung 3 einer Hochdruckpumpe 4 zugeführt, in welcher das Meerwasser auf den erforderlichen Injektionsdruck von beispielsweise ca 100 bis 250 bar gebracht wird. Durch eine Leitung 5 wird sodann das Hochdruck-Meerwasser in ein Bohrloch injiziert.

Ein kleiner Teilstrom wird durch eine Leitung 6 als Treibstrahl einer im Kreislauf des Treibgases angeordneten Strahlpumpe 7 zugeführt. Diese Strahlpumpe saugt durch eine Leitung 8 weitgehend von Sauerstoff befreites Treibgas an und presst dieses durch eine Leitung 9 in die Kolonne 1. In der Kolonne 1 wird der Sauerstoff des Meerwassers weitgehend von dem Treibgas extrahiert.

Das mit Sauerstoff beladene Treibgas wird durch eine Leitung 10 in eine Sauerstoffentfernungsvorrichtung 11 eingespeist. An späterer Stelle werden verschiedene, in der Zeichnung dargestellte Ausführungsformen einer solchen Vorrichtung diskutiert. In der Vorrichtung 11 wird das Treibgas weitgehend von Sauerstoff befreit und strömt sodann in die Kolonne 1 zurück.

Die in Fig. 2 dargestellte Ausführungsform weicht in der Weise von Fig. 1 ab, indem anstelle einer Gegenstromkolonne 1 ein statischer Mischer 12 angeordnet ist. Dieser statische Mischer kann beispielsweise entsprechend den aus den schweizerischen Patentschriften 547 120 und 611 178 bekannten statischen Mischern ausgebildet sein. Der Mischer 12 wird vom Meerwasser und Treibgas im Gleichstrom durchsetzt, wobei das Treibgas mit Sauerstoff beladen wird.

Dem statischen Mischer 12 ist eine Trennvorrichtung 13 nachgeschaltet, die beispielsweise als Zyklon ausgebildet sein kann. In der Vorrichtung 13 wird das deoxidierte Meerwasser vom beladenen Treibgas getrennt.

Die mit der Fig. 1 übereinstimmenden Anlagenteile sind mit den gleichen Bezugszeichen und einem Apostroph versehen.

In einer gemäss Fig. 2 ausgebildeten Anlage können an sich nicht so tiefe Sauerstoffkonzentrationen im Meerwasser erreicht werden, wie dieses bei Fig. 1 der Fall ist. Der Grund hierfür liegt darin, dass ein Gleichstromaustausch bekanntlich weniger wirksam ist als ein Gegenstromaustausch. Jedoch sind Fälle denkbar, wo auch die mit einer gemäss Fig. 2 ausgebildeten Anlage erreichbare Deoxidation ausreichend ist.

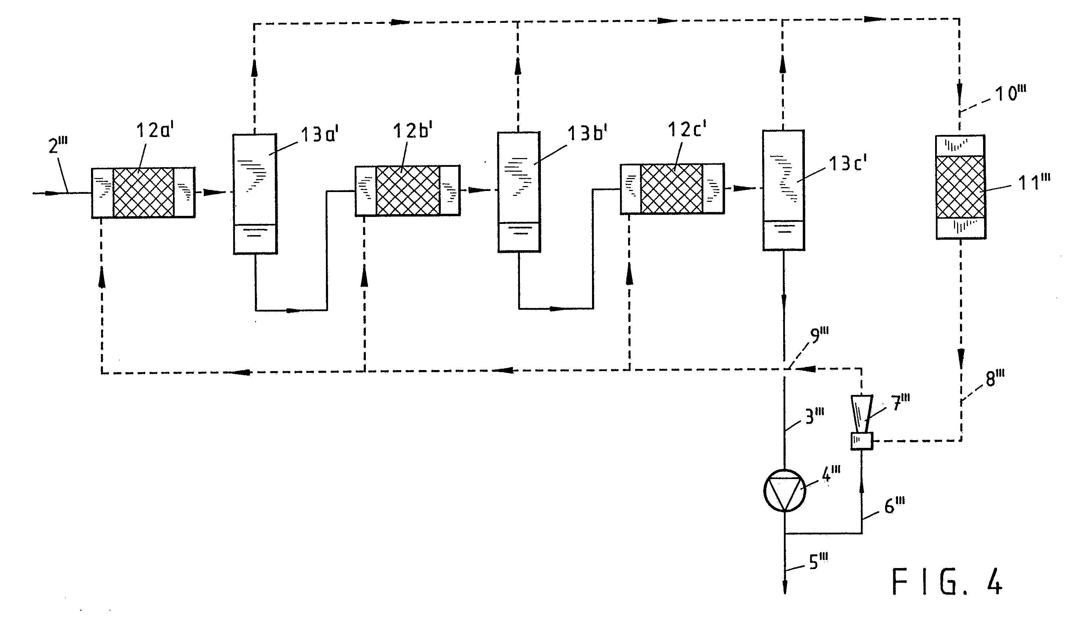

In den Fig. 3 und 4 sind Anlagen dargestellt, in welchen durch entsprechende Schaltungen von mehreren statischen Mischern und Trennvorrichtungen eine mit Fig. 1 vergleichbare Wirksamkeit hinsichtlich des Deoxidationsgrades des zu behandelnden Meerwassers erreicht werden kann.

Gemäss Fig. 3 weist die Anlage drei statische Mischer 12a, 12b und 12c und jeweils nachgeschaltete Trennvorrichtungen 13a, 13b und 13c auf sowie eine, im Treibgaskreislauf angeordnete Sauerstoffentfernungsvorrichtung 11″ und eine Strahlpumpe 7″.

Die mit den Fig. 1 bzw. 2 übereinstimmenden Anlagenelemente bzw. Leitungen sind mit den gleichen Bezugsziffern und mit " " " versehen.

In den Förderleitungen 14a und 14b des Meerwassers zwischen Trennvorrichtung und nachgeschaltetem statischen Mischer sind Pumpen 15a und 15b angeordnet, während in den Förderleitungen 16b" und 16c" des Treibgases Gebläse 17b" und 17c" angeordnet sind. Von den vier Wasser und Gas fördernden Maschinen sind mindestens zwei erforderlich. Die beiden Anderen können zweckmässig für eine optimale Verteilung der Druckverluste sein.

In einer in der Fig. 4 dargestellten Anlage sind ebenfalls drei statische Mischer 12a', 12b' und 12c' mit Trennvorrichtungen 13a', 13b' und 13c' angeordnet. In diesem Fall ist die Anlage so geschaltet, dass keine Pumpen bzw. Gebläse erforderlich sind. Bezüglich des Treibgases sind die drei Mischer und Trennvorrichtungen parallel geschaltet, während diese Aggregate hinsichtlich der Meerwasserströmung in Serie geschaltet sind. Mit den übrigen Figuren übereinstimmende Anlagenelemente bzw. Leitungen sind mit den gleichen Bezugsziffern und " ''' " versehen.

Die Verbindungsleitungen der statischen Mischer und Trennvorrichtungen sind nicht beziffert, da die Wirkungsweise dieser Anlage ohne weiteres anhand der Fig. 2 nachvollzogen werden kann.

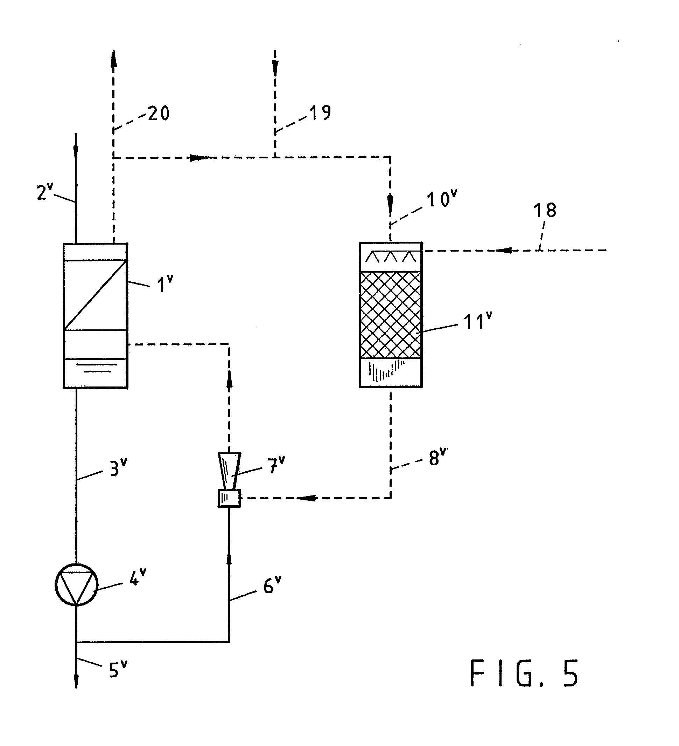

Die Fig. 5 bis 7 betreffen verschiedene Ausführungsformen für die Sauerstoffentfernung aus dem beladenen Treibgas. Diese Vorrichtungen können wahlweise in jedem der in den Fig. 1 bis 4 dargestellten Ausführungsbeispielen eingesetzt werden.

Da die Anlagen in den Fig. 5 bis 7 bis auf die Art der Sauerstoffentfernung mit der Fig. 1 übereinstimmen, sind alle mit der Fig. 1 übereinstimmenden Anlagenelemente mit den gleichen Bezugsziffern und mit "V", "VI" und "VII" versehen.

Im vorliegenden Fall wird der Sauerstoff durch katalytische Verbrennung mit einem Brenngas zerstört.

Da das mit Sauerstoff beladene Treibgas, im Beispiel Erdgas, nur Spuren von Sauerstoff enthält, ist es mit einer Flamme nicht zündbar. Eine katalytische Verbrennung, die daher alleine in Frage kommt, hat den Vorteil, dass die Verbrennungstemperaturen und die katalytischen Zündtemperaturen relativ tief liegen. Hierdurch wird die Vorwärmung des Gemisches einfacher und die Sicherheit der Anlage grösser.

Im vorliegenden Fall wird Erdgas als Brenngas durch eine Leitung 18 in das Katalysatorbett der Vorrichtung 11$^V$ eingespritzt.

Für die Regelung der eingespritzten Erdgasmenge durch Leitung 18 gibt es verschiedene Möglichkeiten.

A) Es wird soviel Erdgas eingespritzt, dass der Druck im Treibgaskreislauf konstant bleibt, d.h. eine Zuspeiseleitung 19 ist in diesem Fall nicht vorhanden.

Wegen der Löslichkeit von Erdgas im Wasser in der Kolonne 1$^V$ tendiert die Zusammensetzung des Treibgases zu einem Gemisch aus reinem Erdgas, Sauerstoff und bei der katalytischen Verbrennung entstehendem Kohlendioxid. Um eine unzulässige Kohlendioxid-Konzentrationserhöhung des Treibgases zu vermeiden, ist es daher nötig, eine gewisse Menge aus dem Kreislauf ständig durch eine Leitung 20 abzublasen. Der Sauerstoffgehalt dieses Gases ist hierbei so weit von den Explosionsgrenzen entfernt, dass innerhalb der Anlage keine Explosionsgefahr besteht. Allerdings kann im Falle die Anlage undichte Stellen aufweist, eine solche Explosionsgefahr nicht ausgeschlossen werden.

B) Um auch diese Gefahr auszuschliessen, kann man als Treibgas Stickstoff und Erdgas als Brenngas verwenden. Die eingespritzte Erdgasmenge wird dann so geregelt, dass etwas mehr Erdgas eingespeist wird als der stöchiometrische Bedarf, um Sauerstoff zu zerstören, unter Berücksichtigung der Löslichkeit von Erdgas in Meerwasser und die mit dem abgeblasenen Kohlendioxid entfernte Erdgasmenge. Um den Druck im Kreislauf zu halten, spritzt man nun in diesem Fall Stickstoff durch eine Leitung 19 in den Kreislauf ein, und zwar spritzt man wesentlich mehr Stickstoff als Erdgas ein. Dieses führt zu dem Ergebnis, dass das Treibgas im wesentlichen aus Stickstoff besteht. Bei dieser Ausführungsform entsteht zwar ein gewisser Stickstoffverbrauch, der aber gegenüber dem Stand der Technik nur unwesentlich ist.

C) Eine weitere Variante besteht darin, dass man anstelle von Stickstoff Luft vor dem Eintritt des Treibgases in die Katalysatorvorrichtung einspeist. In der Vorrichtung 11$^V$ wird der Sauerstoff der Luft verbrannt, und es entsteht wieder Stickstoff als Treibgas. Der Vorteil dieser Ausführungsform gegenüber einer Stickstoffzuspeisung besteht darin, dass keine Stickstofferzeugung notwendig ist.

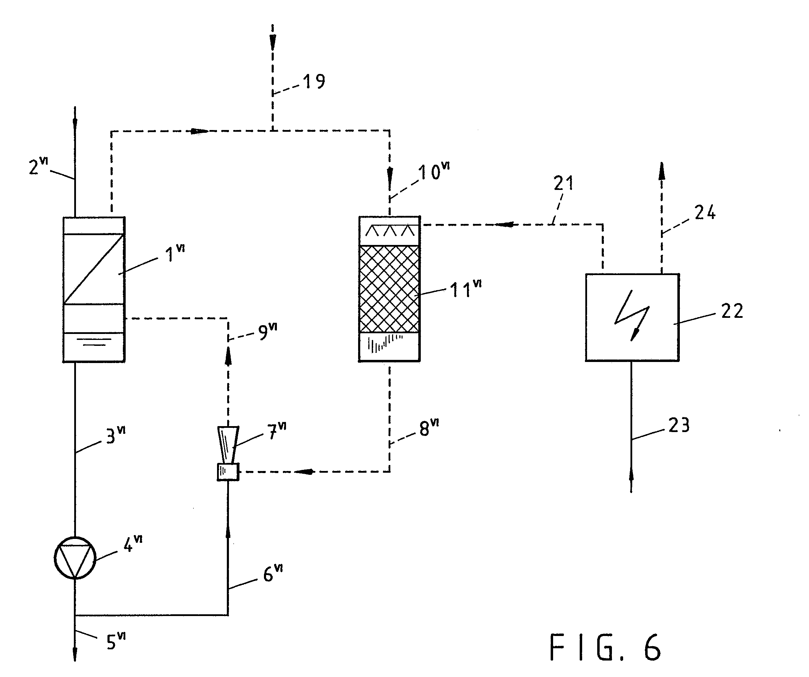

Die Fig. 6 zeigt ein mit Fig. 5 bis daraufhin übereinstimmendes Ausführungsbeispiel der Erfindung, dass anstelle von Erdgas Wasserstoff als Brenngas verwendet wird, der durch eine Leitung 21 in das Katalysatorbett 11$^{VI}$ eingespeist wird. Dieser Wasserstoff wird in einem Elektrolyseur 22 ohne Elektrolyth erzeugt. Demineralisiertes Wasser wird durch eine Leitung 23 in den Elektrolyseur 22 eingespeist und dort in Wasserstoff und Sauerstoff aufgespalten. Der Sauerstoff wird durch eine Leitung 24 in die Atmosphäre weggeführt.

Als Treibgas wird im vorliegenden Fall beispielsweise Wasserstoff, Stickstoff oder Luft verwendet, wobei die bei der Beschreibung der Fig. 5 unter A), B) und C) angeführten Massnahmen ebenfalls gelten. Jedoch wird kein Kohlendioxid produziert und abgeblasen.

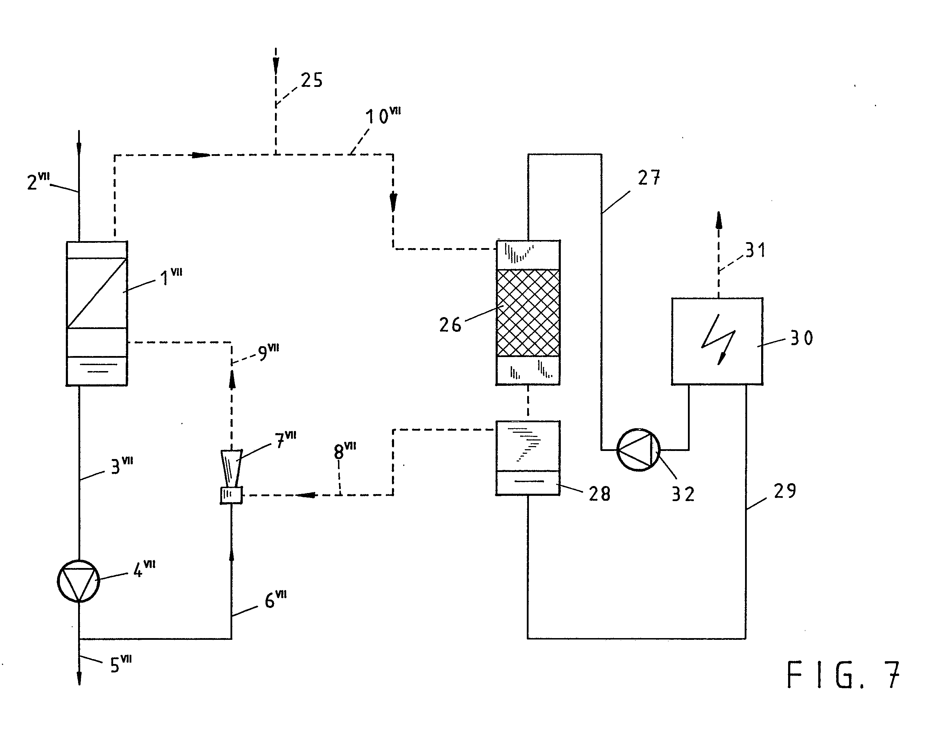

Bei der in der Fig. 7 dargestellten Ausführungsform der Erfindung wird der Sauerstoff von dem beladenen Treibgas nicht durch eine katalytische Verbrennung entfernt, sondern mittels einer Redox-Reaktion.

Als Treibgas kann wieder beispielsweise Erdgas oder Stickstoff verwendet werden, wobei die Verluste durch Zuführung einer entsprechenden Menge von Erdgas oder von Stickstoff in den Kreislauf durch eine Leitung 25 gedeckt werden.

Das mit Sauerstoff beladene Treibgas wird in einer Vorrichtung 26, die z.B. als statischer Mischer ausgebildet ist, eingeleitet. Ausserdem wird in die Vorrichtung 26 durch eine Leitung 27 ein reduzierendes Lösungsmittel, z.B. eine Eisensalzlösung mit zweiwertigem Eisen eingespeist. Bei der stattfindenden Redox-Reaktion wird bekanntlich die Wertigkeit eines Bestandteiles des Lösungsmittels durch Aufnahme von Sauerstoff erhöht. Im Beispiel entsteht ein Lösungsmittel mit einem dreiwertigen Eisenbestandteil. Dieses Lösungsmittel wird, nachdem es von dem nun unbeladenen Treibgas in einer Trennvorrichtung 28 abgetrennt worden ist, durch eine Leitung 29 in einen Elektrolyseur 30 zur Regenerierung eingeleitet.

Der hierbei abgespaltene Sauerstoff wird durch eine Leitung 31 in die Atmosphäre weggeführt, während das regenerierte Lösungsmittel mittels einer Pumpe 32 in die Vorrichtung 26 rezirkuliert wird.

**Patentansprüche**

1. Verfahren zum Deoxidieren von Wasser, insbesondere Meerwasser, welches in Oelfelder eingespritzt wird, wobei das Wasser zur Entfernung seines Sauerstoffgehaltes mit einem gasförmigen Treibmittel in Kontakt gebracht wird, dadurch **gekennzeichnet**, dass das Treibmittel in einem Kreislauf mittels eines Förderorganes zirkuliert, wobei das Treibmittel, nachdem der Sauerstoff von ihm abgetrennt worden ist, erneut mit dem Wasser in Kontakt gebracht wird.

2. Verfahren nach Anspruch 1, dadurch gekennzeichnet, dass der erforderliche Förderdruck im Kreislauf mit Hilfe einer Strahlpumpe erzeugt wird, wobei der Treibstrahl deoxidiertes Druck-Wasser ist.

3. Verfahren nach Anspruch 1, dadurch gekennzeichnet, dass das Wasser mit dem unbeladenen Treibmittel im Gegenstrom in Kontakt gebracht wird.

4. Verfahren nach Anspruch 1, dadurch gekennzeichnet, dass das Wasser mit dem unbeladenen Treibmittel mindestens einmal im Gleichstrom in Kontakt gebracht wird, und dass anschliessend das beladene Treibmittel von dem deoxidierten Wasser abgetrennt wird.

5. Verfahren nach Anspruch 1, dadurch gekennzeichnet, dass der Sauerstoff aus dem mit ihm beladenen Treibmittel durch katalytische Verbrennung mittels eines Brenngases entfernt wird.

6. Verfahren nach Anspruch 1, dadurch gekennzeichnet, dass der Sauerstoff aus dem mit ihm beladenen Treibmittel mit Hilfe eines reduzierenden Lösungsmittels in einer Redox-Reaktion entfernt wird, und dass das mit Sauerstoff beladene Lösungsmittel in einen Elektrolyseur gefördert und regeneriert wird.

7. Verfahren nach Anspruch 1, dadurch gekennzeichnet, dass das Treibmittel aus Stickstoff besteht.

8. Verfahren nach Anspruch 1, dadurch gekennzeichnet, dass das Treibmittel aus Erdgas, insbesondere Methan, besteht.

9. Verfahren nach Anspruch 1, dadurch gekennzeichnet, dass das Treibmittel aus Wasserstoff besteht.

10. Verfahren nach Anspruch 5, dadurch gekennzeichnet, dass das Brenngas aus Erdgas besteht und das bei der katalytischen Verbrennung entstehende Kohlendioxid aus dem Kreislauf entfernt wird.

11. Verfahren nach Anspruch 1, 8 und 10, dadurch gekennzeichnet, dass die der katalytischen Verbrennung zugeführte Erdgasmenge grösser als der stöchiometrische Bedarf zur Zerstörung des Sauerstoffes ist, unter Berücksichtigung der Löslichkeit von Erdgas im Wasser und das bei der Entfernung des Kohlendioxyds aus dem Kreislauf mitentfernte Erdgas.

12. Verfahren nach Anspruch 11, dadurch gekennzeichnet, dass zur Aufrechterhaltung des Druckes im Treibmittelkreislauf eine grössere Menge von Stickstoff als Erdgas in den Kreislauf eingespeist wird, so dass schliesslich das Treibmittel im wesentlichen aus Stickstoff besteht.

13. Verfahren nach Anspruch 11, dadurch gekennzeichnet, dass zur Aufrechterhaltung des Druckes im Treibmittelkreislauf eine grössere Menge von Luft als Erdgas in den Kreislauf vor der katalytischen Verbrennung eingespritzt wird, so dass aufgrund der katalytischen Verbrennung des Sauerstoffes schliesslich das Treibmittel im wesentlichen aus Stickstoff besteht.

14. Verfahren nach Anspruch 5, dadurch gekennzeichnet, dass das Brenngas aus Wasserstoff besteht.

15. Verfahren nach Anspruch 1, 9 und 14, dadurch gekennzeichnet, dass die der katalytischen Verbrennung zugeführte Wasserstoffmenge grösser als der stöchiometrische Bedarf zur Zerstörung des Sauerstoffes ist, unter Berücksichtigung der Löslichkeit von Wasserstoff im Wasser.

16. Verfahren nach Anspruch 15, dadurch gekennzeichnet, dass zur Aufrechterhaltung des Druckes im Treibmittelkreislauf eine grössere Menge von Stickstoff als Wasserstoff in den Kreislauf eingespeist wird, so dass schliesslich das Treibmittel im wesentlichen aus Stickstoff besteht.

17. Verfahren nach Anspruch 15, dadurch gekennzeichnet, dass zur Aufrechterhaltung des Druckes im Treibmittelkreislauf eine grössere Menge von Luft als Wasserstoff in den Kreislauf vor der katalytischen Verbrennung eingespritzt wird, so dass aufgrund der katalytischen Verbrennung des Sauerstoffs schliesslich das Treibmittel im wesentlichen aus Stickstoff besteht.

18. Anlage zur Durchführung des Verfahrens nach Anspruch 1, dadurch gekennzeichnet, dass im Kreislauf der Anlage ausser mindestens einer Kontaktvorrichtung für Wasser und das Treibmittel eine Vorrichtung zur Abtrennung des Sauerstoffes von dem Treibmittel und eine Fördereinrichtung für das Treibmittel angeordnet sind.

19. Anlage nach Anspruch 18, dadurch gekennzeichnet, dass die Kontakteinrichtung aus mindestens einer Extraktionskolonne besteht.

20. Anlage nach Anspruch 18, dadurch gekennzeichnet, dass die Kontakteinrichtung aus mindestens einem statischen Mischer besteht, dem eine Trennvorrichtung für die Abtrennung des deoxidierten Wassers von dem beladenen Treibmittel nachgeschaltet ist.

21. Anlage nach Anspruch 18, dadurch gekennzeichnet, dass die Fördereinrichtung im Kreislauf aus einer Strahlpumpe besteht, die an die Druckseite einer, in der Ableitung des deoxierten Wassers angeordneten Hochdruckpumpe angeschlossen ist.

22. Anlage nach Anspruch 18, dadurch gekennzeichnet, dass als Vorrichtung zur Abtrennung des Sauerstoffs von dem Treibmittel eine katalytische Verbrennungseinrichtung dient.

23. Anlage nach Anspruch 22, dadurch gekennzeichnet, dass das Brenngas aus Wasserstoff besteht, welcher in einem Elektrolyseur ohne Elektrolyth hergestellt ist.

24. Anlage nach Anspruch 18 zur Durchführung des Verfahrens nach Anspruch 6, dadurch gekennzeichnet, dass die Vorrichtung zur Abtrennung des Sauerstoffs von dem Treibmittel aus einem statischen Mischer besteht.

FIG. 1

FIG. 2

EP 0 327 491 A1

2″ 12a 13a 12b 13b 12c 13c

14a 15a 14b 15b 3a″ 9″ 7″

17b″ 17c″ 16c″ 4″

16b″ 5″ 6″

10″ 11″ 8″

EP 0 327 491 A1

FIG. 3

F I G. 4

FIG. 5

FIG. 6

EP 0 327 491 A1

FIG. 7

**Europäisches Patentamt**

**EUROPÄISCHER RECHERCHENBERICHT**

Nummer der Anmeldung

EP 89 81 0022

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 127 711 (NORSK HYDRO A.S.) | | C 02 F 1/20 |
| | * Zusammenfassung; Ansprüche 1,3-11; Seite 1; Zeilen 120-125; Seite 3, Zeilen 13-17; Seite 4, Zeilen 15-20,25-34 * | 1,3,5, 7,8,14, 15,18, 22 | B 01 D 19/00 B 01 D 53/18 F 01 N 3/10 |
| Y | | 2,21 | C 25 B 1/02 |
| | -- | | |
| Y | DE-A-3 143 459 (FÜLLPACK et al.) | | |
| | * Figur; Seite 11, Zeilen 10-15; Seite 13, Zeilen 32-32; Seite 15, Zeilen 23-30 * | 2,21 | |
| | -- | | |
| X | EP-A-0 234 771 (NORSK HYDRO) | | |
| | * Zusammenfassung * | 1 | |
| | -- | | |
| A | DE-A- 596 709 (BARTL) | | |
| | * Seite 3, Zeilen 90-110; Figur 8 * | 2 | RECHERCHIERTE SACHGEBIETE (Int. Cl.4) |
| | -- | | C 02 F |
| A | DE-A- 409 259 (ATLAS) | | B 01 D |
| | * Figur; Seite 2, Zeilen 6-9 * | 2 | |
| | -- | | |
| A | WO-A-85 00 298 (BRITISH HYDROMECHA-NICS RES. ASS.) | | |
| | * Zusammenfassung * | 1 | |
| | -- | | |
| A | PATENT ABSTRACTS OF JAPAN, Band 10, Nr. 63 (C-332)(2120), 13. März 1986 & JP-A-60 200 815 (HITACHI SEISA-KUSHO K.K.) 11-10-1985 | | |
| | * Zusammenfassung * | 10 | |

| Recherchenort | Abschlußdatum der Recherche | Prüfer |
|---|---|---|
| DEN HAAG | 03-05-1989 | KASPERS |

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

namlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## ☒ MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Patentansprüche 1,2,3,5,7,8,14,18,21,22
2. Patentanspruch 4
3. Patentansprüche 6,24
4. Patentansprüche 9,15,16,17
5. Patentanspruch 10
6. Patentanspruche 11,12,13
7. Patentanspruch 19
8. Patentanspruch 20
9. Patentanspruch 23

☐ Alle weiteren Recherchengebühren wurden innerhalb der gesetzten Frist entrichtet. Der vorliegende europäische Recherchenbericht wurde für alle Patentansprüche erstellt.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche: 1,2,3,5,7,8,14,18,21,22,10 (Punkte 1 und 5)

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: